# EUROPEAN PATENT APPLICATION

(11) **EP 4 576 240 A1**
(43) Date of publication of application: **25.06.2025**
(21) Application number: 22959141.7
(22) Date of filing: 22.09.2022
(51) Int. Cl.: H01M 4/13, H01M 10/0525

(54) **ELECTROCHEMICAL APPARATUS, MANUFACTURING METHOD THEREFOR, AND ELECTRONIC APPARATUS**

(71) Applicant: Ningde Amperex Technology Limited, Ningde, Fujian 352100 (CN)
(72) Inventor: YAN, Dongyang, Ningde, Fujian 352100 (CN)
(74) Representative: Icosa
(86) International application number: PCT/CN2022/120528
(87) International publication number: WO 2024/060131

(57) **Abstract**

This application provides an electrochemical apparatus, a preparation method thereof, and an electronic apparatus. The electrochemical apparatus includes an electrode assembly, where the electrode assembly includes a positive electrode plate. The positive electrode plate features a single-sided groove embedded tab structure. The positive electrode plate includes a positive electrode current collector and a second positive electrode active material layer disposed on a second surface of the positive electrode current collector. The second positive electrode active material layer includes a second positive electrode active material, where the second positive electrode active material includes element M, and the element M includes at least one of manganese, iron, lanthanum, zirconium, or yttrium. The positive electrode plate of this application can enhance energy density of the electrochemical apparatus based on the existing embedded tab structure. At the same time, through the element M, thermal stability of the second positive electrode active material can be improved, thereby alleviating the aging problem of the positive electrode plate caused by the single-sided groove embedded tab structure, and consequently improving the safety performance of the electrochemical apparatus.

## Description

### TECHNICAL FIELD

This application relates to the field of electrochemical technologies, and specifically, to an electrochemical apparatus, a preparation method thereof, and an electronic apparatus.

### BACKGROUND

Lithium-ion batteries (electrochemical apparatus) have characteristics such as high operating voltage, high energy density, long cycle life, and wide operating temperature range. These excellent characteristics have enabled lithium-ion batteries to be widely used in the three major fields of consumer electronics, power batteries, and energy storage.

In common wound structure lithium-ion batteries, to reduce the impedance of the lithium-ion battery, instead of using the solution of placing the tabs at the end of the electrode plate, uncoated zones, where the tabs are placed, are provided on two sides at a position closer to the center of the electrode plate. This structure is called an embedded tab structure.

### SUMMARY

The purpose of this application is to provide an electrochemical apparatus, a preparation method thereof, and an electronic apparatus to improve the energy density and safety performance of the electrochemical apparatus. Specific technical solutions are as follows:

According to a first aspect of this application, an electrochemical apparatus is provided, including an electrode assembly, where the electrode assembly includes a positive electrode plate. The positive electrode plate includes a positive electrode current collector and a first positive electrode active material layer disposed on a first surface of the positive electrode current collector and a second positive electrode active material layer disposed on a second surface of the positive electrode current collector, the first surface and the second surface are two opposite surfaces of the positive electrode current collector, and the first positive electrode active material layer is provided with a first groove exposing the first surface. The positive electrode plate further includes a positive electrode tab, the positive electrode tab includes a positive electrode connection portion, the positive electrode connection portion is at least partially located within the first groove and welded to the first surface, and the second surface corresponding to the first groove is covered by the second positive electrode active material layer. The second positive electrode active material layer includes a second positive electrode active material, the second positive electrode active material includes element M, and the element M includes at least one of manganese, iron, lanthanum, zirconium, or yttrium. Based on a total mass of the second positive electrode active material, a mass percentage of manganese or iron is D%, wherein 0.02 ≤ D ≤ 35.00, and a mass percentage of lanthanum, zirconium, or yttrium is E%, wherein 0.02 ≤ E ≤ 0.20.

Beneficial effects of the embodiments of this application: In this application, the electrochemical apparatus is provided with the first groove exposing the first surface on the first positive electrode active material layer, the positive electrode connection portion is at least partially located within the first groove and welded to the first surface, forming a single-sided groove embedded tab structure, and the second surface is provided with the second positive electrode active material layer, achieving the retention of an uncoated foil zone on only one side of the positive electrode plate, unlike an existing positive electrode plate with an embedded tab structure that requires the retention of an uncoated foil zone on each of two sides, thereby enhancing the energy density of the electrochemical apparatus. Additionally, this can alleviate the problem of poor interface between the positive electrode and the negative electrode at the position where the tab is provided, reducing the risk of lithium precipitation. At the same time, the second positive electrode active material of this application includes element M. The selection of the element M within the above range and the adjustment of its percentage within the above range can help to improve the thermal stability of the second positive electrode active material, thereby alleviating the aging problem of the positive electrode plate and enhancing the safety performance of the electrochemical apparatus. Using the technical solution of this application can achieve improved energy density and safety performance of the electrochemical apparatus.

In an embodiment of this application, the positive electrode connection portion is welded to the first surface through laser welding. Laser welding requires energy to be applied only to one side of the positive electrode current collector to melt the welding position, making it more suitable for the electrode plate structure of this application. Through laser welding, the aging problem of the existing embedded tab structure positive electrode plate can be improved, thereby enhancing the safety of the electrochemical apparatus.

In an embodiment of this application, the positive electrode connection portion and the first surface are welded to form a welding portion, wherein the welding portion penetrates through the positive electrode tab and at least partially penetrates the positive electrode current collector. Through the provision of such a structure, connection strength between the positive electrode connection portion and the positive electrode current collector is further enhanced, thereby further improving the anti-detachment capability of the positive electrode tab and enhancing the safety performance of the electrochemical apparatus.

In an embodiment of this application, Dᵥ50 of the second positive electrode active material is B µm, welding strength between the positive electrode connection portion and the positive electrode current collector is A N/m, a thickness of the positive electrode current collector is T µm, and tensile strength of the positive electrode current collector is S MPa, wherein B/T × A < S. The adjustment of B, A, T, and S to satisfy the above relationship helps to improve the connection strength between the positive electrode connection portion and the positive electrode current collector, thereby enhancing the anti-detachment capability of the positive electrode tab and improving the safety performance of the electrochemical apparatus.

In an embodiment of this application, 0.5 ≤ B ≤ 18. The adjustment of B within the above range helps to reduce deformation of the positive electrode plate after cold pressing. The adjustment of A within the range of 5 ≤ A ≤ 50 can reduce a risk of damage to the positive electrode current collector or detachment of the surface active material due to excessive welding energy, as well as a risk of insufficient connection strength between the positive electrode current collector and the positive electrode tab due to insufficient welding energy. The adjustment of T and S within the ranges of 4 ≤ T ≤ 14 and 50 ≤ S ≤ 500 helps to improve the bearing capacity of the positive electrode current collector, thereby enhancing the anti-detachment capability of the positive electrode tab and improving the safety performance of the electrochemical apparatus.

In an embodiment of this application, a thermal conductivity of the positive electrode current collector ranges from 30 W·m⁻¹·K⁻¹ to 400 W·m⁻¹·K⁻¹, preferably 200 W·m⁻¹·K⁻¹ to 250 W·m⁻¹·K⁻¹; and a thermal conductivity of the positive electrode tab ranges from 30 W·m⁻¹·K⁻¹ to 400 W·m⁻¹·K⁻¹, preferably 200 W·m⁻¹·K⁻¹ to 250 W. m⁻¹·K⁻¹. The selection of the positive electrode current collector and positive electrode tab with thermal conductivities within the above ranges helps to improve the heat dissipation performance of the positive electrode plate, thereby mitigating the aging problem of the positive electrode plate caused by heat accumulation during the use of the electrochemical apparatus, and further enhancing the safety performance of the electrochemical apparatus.

In an embodiment of this application, the electrochemical apparatus includes a packaging bag, the electrode assembly is accommodated in the packaging bag, and the first surface faces the packaging bag, thereby improving the interfaces between the positive electrode plate, separator, and negative electrode plate.

In an embodiment of this application, the electrode assembly further includes a negative electrode plate and a separator disposed between the positive electrode plate and the negative electrode plate, the positive electrode plate, the separator, and the negative electrode plate are stacked together, and the second positive electrode active material layer on the second surface corresponding to the first groove is in contact with the separator. When such a structure is configured, an extra groove is not provided, therefore adhesive tape needs not to be provided, which also reduces the thickness and improves the interface smoothness, thereby helping to increase the energy density of the electrochemical apparatus.

In an embodiment of this application, the negative electrode plate includes a negative electrode current collector and negative electrode active material layers disposed on two surfaces of the negative electrode current collector, the negative electrode active material layers on the two surfaces of the negative electrode current collector each are provided with a second groove exposing the surface of the negative electrode current collector, and the second groove on one side of the negative electrode current collector is opposite the second groove on another side of the negative electrode current collector. The negative electrode plate further includes a negative electrode tab, wherein the negative electrode tab includes a negative electrode connection portion, and the negative electrode connection portion is at least partially located within the second groove and welded to the negative electrode current collector, the welding including ultrasonic welding or resistance welding. The configuration of such a structure can improve the welding strength of the negative electrode tab, reducing the risk of failure due to dropping. Furthermore, using ultrasonic welding or resistance welding can protect the negative electrode current collector and the negative electrode active material layer from being damaged. The negative electrode active material layer of this application includes graphite, which helps to mitigate the problem of change in material structure of the negative electrode active material layer due to the impact of laser welding heat, thereby reducing the risk of lithium precipitation.

In an embodiment of this application, the first positive electrode active material layer includes a first positive electrode active material, a first binder, and a first conductive agent, and the second positive electrode active material layer further includes a second binder and a second conductive agent; and the first positive electrode active material or the second positive electrode active material includes at least one of lithium cobalt oxide, lithium nickel cobalt manganese oxide, lithium nickel cobalt aluminum oxide, lithium manganese oxide, lithium iron phosphate, lithium iron manganese phosphate, or lithium-rich manganese-based oxide. Selection of the above ceramic materials can improve the heat-resistance performance of the first positive electrode active material or the second positive electrode active material, reducing the impact of welding, and helping to enhance the safety performance of the electrochemical apparatus. The first binder or the second binder includes at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. When the binder within the above range is applied to the positive electrode plate, the positive electrode plate has good structural stability, which helps to improve the cycling performance and swelling performance of the electrochemical apparatus. The first conductive agent or the second conductive agent includes at least one of conductive carbon black, carbon nanotubes, conductive graphite, graphene, or carbon nanofibers. The selection of the above conductive agent helps to improve the conductivity of the positive electrode plate.

In an embodiment of this application, the second positive electrode active material layer includes a first layer and a second layer stacked together, the first layer is located between the positive electrode current collector and the second layer, the second layer includes the second positive electrode active material, and the first layer includes a ceramic material, a third binder, and a third conductive agent; The ceramic material includes at least one of hafnium dioxide, strontium titanate, tin dioxide, cesium oxide, magnesium oxide, nickel oxide, calcium oxide, barium oxide, zinc oxide, zirconium oxide, yttrium oxide, aluminum oxide, titanium oxide, silicon dioxide, boehmite, magnesium hydroxide, or aluminum hydroxide. Selection of the above ceramic materials can improve the heat-resistance performance of the first positive electrode active material or the second positive electrode active material, reducing the impact of welding. Additionally, when the above ceramic materials are selected, a resistance layer with high resistance is adhered on a surface of the positive electrode current collector, reducing the risk of an internal short circuit caused by direct contact between the positive electrode current collector and the negative electrode active material layer, which could lead to combustion or explosion, thereby enhancing the safety performance of the electrochemical apparatus. The third binder includes at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. When the binder within the above range is applied to the positive electrode plate, the positive electrode plate has good structural stability, which helps to improve the cycling performance and swelling performance of the electrochemical apparatus. The third conductive agent includes at least one of conductive carbon black, carbon nanotubes, conductive graphite, graphene, or carbon nanofibers. The selection of the above conductive agent helps to improve the conductivity of the positive electrode plate.

In an embodiment of this application, the first layer further includes lithium iron phosphate. Lithium iron phosphate has good heat-resistance performance, which helps to improve the heat-resistance performance of the first layer. Additionally, the lithium iron phosphate material has high resistance in the first layer, which can increase the short-circuit resistance and reduce the short-circuit current when a short circuit occurs due to contact between the positive electrode and negative electrode under mechanical abuse conditions. Moreover, lithium iron phosphate can undergo lithium intercalation and deintercalation, which helps to increase the capacity of the electrochemical apparatus. Furthermore, lithium iron phosphate has a small particle size at the nanometer scale, which helps to reduce deformation of the positive electrode plate after rolling. During welding, this can lower the risk of poor welding or even welding through the positive electrode current collector, thereby enhancing the safety performance of the electrochemical apparatus.

A second aspect of this application provides a preparation method of an electrochemical apparatus, including:
providing a positive electrode current collector, disposing a first positive electrode active material layer on a first surface of the positive electrode current collector, and disposing a second positive electrode active material layer on a second surface of the positive electrode current collector, wherein the first surface and the second surface are two opposite surfaces of the positive electrode current collector, and the first positive electrode active material layer is provided with a first groove exposing the first surface; and
providing a positive electrode tab, and welding the positive electrode tab to the first surface exposed by the first groove, such that a positive electrode connection portion of the positive electrode tab is connected to the first surface, wherein the second surface corresponding to the first groove is covered by the second positive electrode active material layer, the second positive electrode active material layer includes a second positive electrode active material, the second positive electrode active material includes element M, the element M includes at least one of manganese, iron, lanthanum, zirconium, or yttrium, and Based on a total mass of the second positive electrode active material, a mass percentage of manganese or iron is D%, wherein 0.02 ≤ D ≤ 35.00, and a mass percentage of lanthanum, zirconium, or yttrium is E%, wherein 0.02 ≤ E ≤ 0.20.

The electrochemical apparatus obtained by the preparation method provided in the second aspect of this application can improve the energy density and safety performance of the electrochemical apparatus.

In an embodiment of this application, laser irradiation is applied to the positive electrode connection portion to weld the positive electrode connection portion to the first surface, which can ensure that the connection strength between the positive electrode connection portion and the positive electrode current collector meets the requirements, thereby improving the anti-detachment capability of the positive electrode tab, and enhancing the safety performance of the electrochemical apparatus.

A third aspect of this application provides an electronic apparatus, including the electrochemical apparatus according to the first aspect of this application. The electrochemical apparatus provided in this application has high energy density and good safety performance, enabling the electronic apparatus in this application to have a long battery life and service life.

This application provides an electrochemical apparatus, a preparation method thereof, and an electronic apparatus, where the electrochemical apparatus is provided with the first groove exposing the first surface on the first positive electrode active material layer, the positive electrode connection portion is at least partially located within the first groove and welded to the first surface, forming a single-sided groove embedded tab structure, and the second surface is provided with the second positive electrode active material layer, achieving the retention of an uncoated foil zone on only one side of the positive electrode plate, unlike an existing positive electrode plate with an embedded tab structure that requires the retention of an uncoated foil zone on two sides, thereby enhancing the energy density of the electrochemical apparatus. Additionally, this can alleviate the problem of poor interface between the positive electrode and the negative electrode at the position where the tab is provided, reducing the risk of lithium precipitation. At the same time, the second positive electrode active material of this application includes the element M. The selection of the element M within the range of this application and the adjustment of its percentage within the range of this application help to improve the thermal stability of the positive electrode active material, thereby alleviating the aging problem of the positive electrode plate with the embedded tab structure, and enhancing the safety performance of the electrochemical apparatus. Using the technical solution of this application can achieve improved energy density and safety performance of the electrochemical apparatus.

### BRIEF DESCRIPTION OF DRAWINGS

To describe the technical solutions in some embodiments of this application and in the prior art more clearly, the following briefly describes the accompanying drawings required for describing some embodiments and the prior art. Apparently, the accompanying drawings in the following descriptions show only some embodiments of this application, and persons of ordinary skill in the art may still derive other drawings from these accompanying drawings.
FIG. 1 is a schematic structural diagram of an electrode assembly with an embedded tab structure in the prior art;
FIG. 2 is a schematic structural diagram of an electrochemical apparatus according to an embodiment of this application;
FIG. 3 is a schematic structural diagram of a positive electrode plate according to an embodiment of this application;
FIG. 4 is a cross-sectional view of a positive electrode plate along its thickness direction at section A-A according to an embodiment of this application;
FIG. 5 is a cross-sectional view of a positive electrode plate along its thickness direction at section A-A according to another embodiment of this application;
FIG. 6 is a locally enlarged view of a welding portion formed by welding a positive electrode connection portion and a first surface according to an embodiment of this application; and
FIG. 7 is a cross-sectional view of a positive electrode plate along its thickness direction at section A-A according to another embodiment of this application.

### REFERENCE SIGNS

Electrode assembly-1, positive electrode plate-10, positive electrode current collector-11, first positive electrode active material layer-12, second positive electrode active material layer-13, first groove-14, positive electrode tab-15, welding portion-16, negative electrode plate-20, negative electrode current collector-21, negative electrode active material layer-22, second groove-23, negative electrode tab-24, separator-30, packaging bag-40, first surface-111, second surface-112, third layer-121, fourth layer-122, first layer-131, second layer-132, positive electrode connection portion-151, and negative electrode connection portion-241.

### DETAILED DESCRIPTION

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application shall fall within the protection scope of this application.

In the specific embodiments of this application, a lithium-ion battery is used as an example of an electrochemical apparatus to explain this application. However, the electrochemical apparatus in this application is not limited to the lithium-ion battery, it may also be sodium-ion battery, and the like.

In this application, a thickness direction of the electrode plate in an unfolded state is defined as a z direction, and the two directions perpendicular to the z direction are defined as an x direction and a y direction, where the x direction and the y direction are perpendicular to each other. The x direction is an extension direction of a long side after the electrode plate is unfolded, and the y direction is an extension direction of a short side after the electrode plate is unfolded. In this application, a thickness direction of the electrode plate in a wound state is defined as a z' direction, and the two directions perpendicular to the z' direction are defined as an x' direction and a y' direction, where the x' direction and the y' direction are perpendicular to each other. The y' direction is an extension direction of a winding axis of the electrode plate, and the x' direction is a direction perpendicular to the y' direction in a plane of the electrode plate. The electrode plate includes a positive electrode plate and a negative electrode plate.

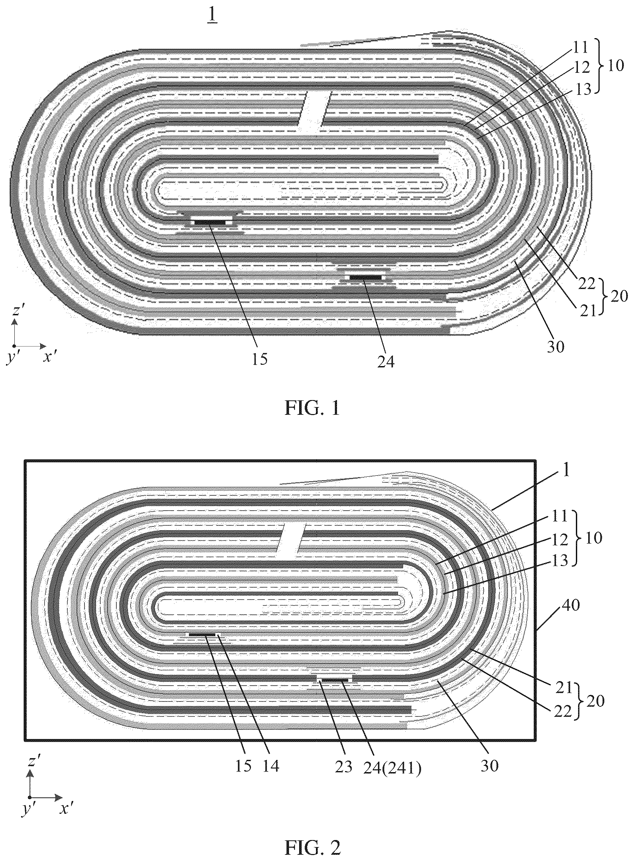

An existing lithium-ion battery with an embedded tab structure has a region not coated with the active material layer on each of two sides near the center of the positive electrode plate 10. Specifically, referring to FIG. 1, on the one hand, at a position where the positive electrode current collector 11 is connected to the positive electrode tab 15, each of two sides of the positive electrode current collector 11 is not provided with a positive electrode active material layer. Due to the absence of the positive electrode active material layer in this portion, the energy density of a lithium-ion battery with this embedded tab structure needs to be improved; on the other hand, the provision of the positive electrode tab 15 requires the provision of a groove on each of two sides and an adhesive tape needs to be adhered to the groove. In addition, an adhesive tape needs also to be adhered to a negative electrode active material layer 22 opposite the grooves, resulting in a thicker thickness at the region adhered with the adhesive tape, thus leading to a poor interface between the positive electrode and negative electrode in the region corresponding to the grooves and a higher risk of lithium precipitation.

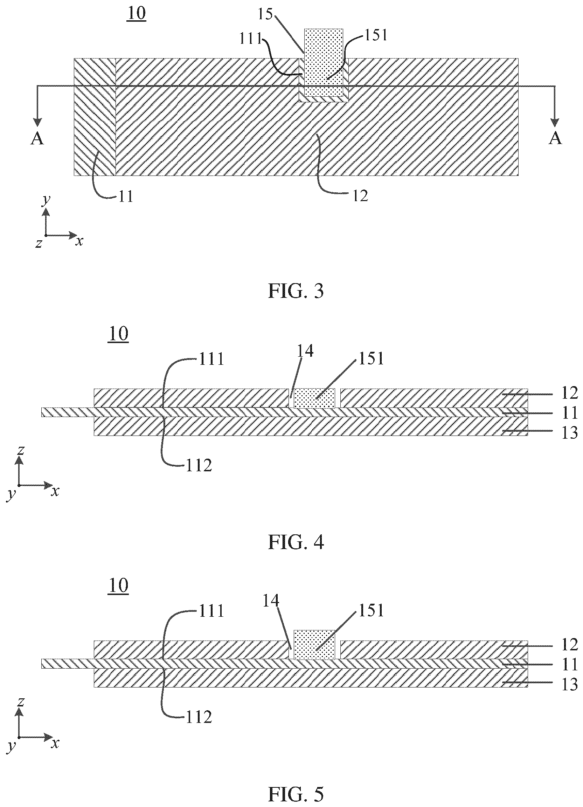

In view of this, according to a first aspect of this application, an electrochemical apparatus is provided. As shown in FIG. 2, the electrochemical apparatus includes an electrode assembly 1, and the electrode assembly 1 includes a positive electrode plate 10, a negative electrode plate 20, and a separator 30. FIG. 3 is a schematic structural diagram of a positive electrode plate according to an embodiment of this application. FIG. 4 is a cross-sectional view of a positive electrode plate along its thickness direction at section A-A according to an embodiment of this application. Referring to FIG. 3 and FIG. 4, the positive electrode plate 10 includes a positive electrode current collector 11, and the positive electrode current collector 11 includes a first surface 111 and a second surface 112, where the first surface 111 and the second surface 112 are two opposite surfaces of the positive electrode current collector 11. The positive electrode plate 10 further includes a first positive electrode active material layer 12 disposed on the first surface 111 of the positive electrode current collector 11 and a second positive electrode active material layer 13 disposed on the second surface 112 of the positive electrode current collector 11. The first positive electrode active material layer 12 is provided with a first groove 14 exposing the first surface 111, and the positive electrode plate 10 further includes a positive electrode tab 15. The positive electrode tab 15 includes a positive electrode connection portion 151, and the positive electrode connection portion 151 is at least partially located within the first groove 14 and welded to the first surface 111. The second surface 112 corresponding to the first groove 14 is covered by the second positive electrode active material layer 13, the second positive electrode active material layer 13 includes a second positive electrode active material, and the second positive electrode active material includes element M, where the element M includes at least one of manganese (Mn), iron (Fe), lanthanum (La), zirconium (Zr), or yttrium (Y), and based on a total mass of the second positive electrode active material, a mass percentage of manganese or iron is D%, where 0.02 ≤ D ≤ 35.00, and a mass percentage of lanthanum, zirconium, or yttrium is E%, where 0.02 ≤ E ≤ 0.20.

In this application, the second surface 112 corresponding to the first groove 14 is the region of an orthographic projection of a sidewall of the first groove 14 along the z direction onto the second surface 112 of the positive electrode current collector 11. In this application, the second surface 112 corresponding to the first groove 14 being covered by the second positive electrode active material layer 13 means that the entire region of the orthographic projection of the sidewall of the first groove 14 along the z direction onto the second surface 112 of the positive electrode current collector 11 is provided with the second positive electrode active material layer 13.

In this application, the positive electrode connection portion 151 is a portion where the positive electrode tab 15 overlaps with the positive electrode current collector 11. The foregoing positive electrode connection portion 151 being at least partially located within the first groove 14 includes two cases where the entire positive electrode connection portion 151 is located within the first groove 14 (as shown in FIG. 4) and where part of the positive electrode connection portion 151 is located within the first groove 14 (as shown in FIG. 5).

The inventor has found that for an electrochemical apparatus with an embedded tab structure, at the connection between the tab and the current collector, although the energy density can be improved by applying a positive electrode active material layer on a side of the current collector not welded to the tab, during the welding process of the tab, a significant amount of heat is generated at the welding position, and the heat is quickly conducted from one side of the current collector to another side, affecting the stability of the positive electrode active material layer on the side not welded to the tab. Consequently, this impacts the stability of the positive electrode plate, making the positive electrode plate more prone to aging and even causing the active material layer to peel off during use. In an electrochemical apparatus made of such a positive electrode plate, after multiple charge and discharge cycles, the active material layer on the side not welded to the tab in the welding region is more prone to issues such as decreased adhesion and powder shedding, causing an increase in the thickness of the welding region, thus creating a thickness difference with the non-welding region. In the vicinity of the location where the thickness difference occurs, large gaps are formed between the positive electrode plate, separator, and negative electrode plate. During the charge and discharge cycles of the electrochemical apparatus, side reactions and impedance increase in the gaps, leading to an increased risk of lithium precipitation in the electrochemical apparatus. In addition, during the charge and discharge cycles of the electrochemical apparatus, a region of the current collector that is not coated with the active material on two sides (that is, an uncoated foil zone) is a region where a large number of electrons flow through. Its current density is the highest in the entire positive electrode plate, making it prone to overheating issues.

It was found based on the above research that: in this application, the electrochemical apparatus is provided with the first groove exposing the first surface on the first positive electrode active material layer, the positive electrode connection portion is at least partially located within the first groove and welded to the first surface, forming a single-sided groove embedded tab structure, and the second surface is provided with the second positive electrode active material layer, achieving the retention of an uncoated foil zone on only one side of the positive electrode plate, unlike an existing positive electrode plate with an embedded tab structure that requires the retention of an uncoated foil zone on each of two sides, thereby enhancing the energy density of the electrochemical apparatus. Additionally, this can alleviate the problem of poor interface between the positive electrode and the negative electrode at the position where the tab is provided, reducing the risk of lithium precipitation. Meanwhile, the second positive electrode active material of this application includes the element M. The selection of the element M within the above range and the adjustment of its percentage within the above range can help to improve the thermal stability of the second positive electrode active material, thereby improving the stability of the positive electrode plate. This not only can alleviate the aging and powder shedding issues of the positive electrode plate caused by overheating during use, but also can alleviate the adhesion decrease and powder shedding issues exacerbated during soaking in the electrolyte or prolonged cycling, reducing the likelihood of gaps forming between the positive electrode plate, separator, and negative electrode plate due to powder shedding, thus lowering the risk of lithium precipitation of the negative electrode plate and further enhancing the safety performance of the electrochemical apparatus.

As shown in FIG. 4, the first positive electrode active material layer 12 and the second positive electrode active material layer 13 of this application are respectively disposed on the first surface 111 and the second surface 112 of the positive electrode current collector 11, where the first surface 111 and the second surface 112 are two opposite surfaces of the positive electrode current collector 11 in the thickness direction. The "surface" herein may be an entire region of the positive electrode current collector 11 or a partial region of the positive electrode current collector 11. This is not particularly limited in this application, provided that the objectives of the invention of this application can be achieved.

In an embodiment of this application, the positive electrode connection portion 151 is welded to the first surface 111 through laser welding. Laser welding requires energy to be applied only to one side of the positive electrode current collector 11 to melt the welding position, making it more suitable for the electrode plate structure of this application. When laser irradiation is applied to the welding position, no force is applied to the welding position, which can reduce the impact on the first positive electrode active material layer around the welding position, and reduce the risk of decreased adhesion force and powder shedding of the first positive electrode active material layer caused by welding vibrations. Furthermore, laser welding energy is concentrated, which can also reduce the impact of welding heat on the surrounding first positive electrode active material layer. Thus, laser welding can alleviate the aging problem of an existing positive electrode plate with an embedded tab structure, thereby enhancing the safety of the electrochemical apparatus.

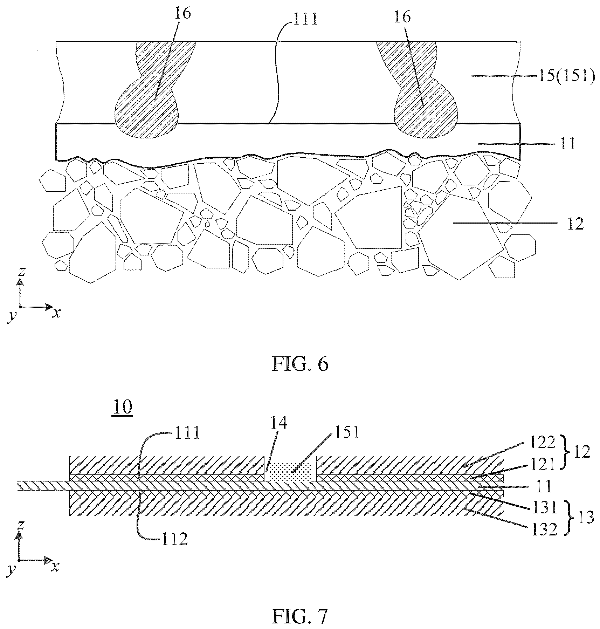

In an embodiment of this application, as shown in FIG. 6, the positive electrode connection portion 151 and the first surface 111 are welded to form a welding portion 16, wherein the welding portion 16 penetrates through the positive electrode tab 15 and at least partially penetrates the positive electrode current collector 11. Through the provision of such a structure, connection strength between the positive electrode connection portion 151 and the positive electrode current collector 11 is further enhanced, thereby further improving the anti-detachment capability of the positive electrode tab and enhancing the safety performance of the electrochemical apparatus.

In an embodiment of this application, Dᵥ50 of the second positive electrode active material is B µm, welding strength between the positive electrode connection portion 151 and the positive electrode current collector 11 is A N/m, a thickness of the positive electrode current collector 11 is T µm, and tensile strength of the positive electrode current collector 11 is S MPa, wherein B/T × A < S. The adjustment of B, A, T, and S to satisfy the above relationship helps to improve the connection strength between the positive electrode connection portion 151 and the positive electrode current collector 11, thereby enhancing the anti-detachment capability of the positive electrode tab and improving the safety performance of the electrochemical apparatus. In this application, Dᵥ50 is a particle size where the cumulative distribution by volume reaches 50% as counted from the small particle size side. In this application, screening tools can be used to select positive electrode active materials that meet different Dᵥ50 requirements.

In an embodiment of this application, 0.5 ≤ B ≤ 18. The adjustment of B within the above range helps to reduce deformation of the positive electrode plate after cold pressing. The adjustment of A within the range of 5 ≤ A ≤ 50 can reduce a risk of damage to the positive electrode current collector 11 or detachment of the surface active material due to excessive welding energy, as well as a risk of insufficient connection strength between the positive electrode current collector 11 and the positive electrode tab 15 due to insufficient welding energy. The adjustment of T and S within the ranges of 4 ≤ T ≤ 14 and 50 ≤ S ≤ 500 helps to improve the bearing capacity of the positive electrode current collector 11, thereby enhancing the anti-detachment capability of the positive electrode tab and improving the safety performance of the electrochemical apparatus.

In an embodiment of this application, a thermal conductivity of the positive electrode current collector 11 ranges from 30 W·m⁻¹·K⁻¹ to 400 W·m⁻¹·K⁻¹; and a thermal conductivity of the positive electrode tab 15 ranges from 30 W·m⁻¹·K⁻¹ to 400 W·m⁻¹·K⁻¹. Preferably, a thermal conductivity of the positive electrode current collector 11 ranges from 200 W·m⁻¹·K⁻¹ to 250 W·m⁻¹·K⁻¹; and a thermal conductivity of the positive electrode tab 15 ranges from 200 W·m⁻¹·K⁻¹ to 250 W·m⁻¹·K⁻¹. The selection of the positive electrode current collector 11 and positive electrode tab 15 with thermal conductivities within the above ranges helps to improve the heat dissipation performance of the positive electrode plate, thereby mitigating the aging problem of the positive electrode plate caused by heat accumulation during the use of the electrochemical apparatus, and further enhancing the safety performance of the electrochemical apparatus.

From a perspective of improving the heat dissipation performance of the positive electrode plate 10, a material of the positive electrode current collector 11 in this application may include aluminum, aluminum alloy, stainless steel, titanium and titanium alloy, nickel and nickel alloy, and the like; and a material of the positive electrode tab 15 in this application may include aluminum, aluminum alloy, stainless steel, titanium and titanium alloy, nickel and nickel alloy, and the like.

In an embodiment of this application, as shown in FIG. 2, the electrochemical apparatus includes a packaging bag 40, the electrode assembly 1 is accommodated in the packaging bag 40, and the first surface 111 faces the packaging bag 40. The electrode assembly 1 is shaped after manufacturing, and pressure is applied. After the electrode assembly 1 is packaged in the packaging bag 40, pressure is applied during formation to make the positive electrode plate 10 and the negative electrode plate 20 be in close contact with each other. With the first surface 111 facing the packaging bag 40, the positive electrode tab 15 faces the pressure clamp when pressure is applied, and on another side of the positive electrode tab 15, the second positive electrode active material layer 13 is abutting the positive electrode current collector 11, which enables better force bearing, thereby improving the interface between the positive electrode plate 10, separator 30, and negative electrode plate 20. The packaging bag 40 is not particularly limited in this application, and it can be selected according to actual needs, provided that the objectives of the invention of this application can be achieved. For example, an aluminum-plastic film packaging bag or a steel-plastic film packaging bag can be used.

In an embodiment of this application, as shown in FIG. 2, a separator 30 is disposed between the positive electrode plate 10 and the negative electrode plate 20, the positive electrode plate 10, the separator 30, and the negative electrode plate 20 are stacked together, and the second positive electrode active material layer 13 on the second surface 112 corresponding to the first groove 14 is in contact with the separator 30. In an existing electrochemical apparatus with an embedded tab structure, a groove also needs to be provided on the second surface corresponding to the first groove. Moreover, adhesive tape also needs to be provided on this extra groove provided, and the adhesive tape is in contact with the separator. The presence of the adhesive tape increases the thickness and causes the contact interface to be uneven, thereby increasing the risk of lithium precipitation in the electrochemical apparatus. When no extra groove is provided, adhesive tape needs not to be provided, which also reduces the thickness and improves the interface smoothness, thereby helping to increase the energy density of the electrochemical apparatus.

In an embodiment of this application, as shown in FIG. 2, the negative electrode plate 20 includes a negative electrode current collector 21 and negative electrode active material layers 22 disposed on two surfaces of the negative electrode current collector 21, the negative electrode active material layers 22 on the two surfaces of the negative electrode current collector 21 each are provided with a second groove 23 exposing the surface of the negative electrode current collector 21, and the second groove 23 on one side of the negative electrode current collector 21 is opposite the second groove 23 on another side of the negative electrode current collector 21. The negative electrode plate 20 further includes a negative electrode tab 24, wherein the negative electrode tab 24 includes a negative electrode connection portion 241, and the negative electrode connection portion 241 is at least partially located within the second groove 23 and welded to the negative electrode current collector 21, the welding including ultrasonic welding or resistance welding. The configuration of such a structure can improve the welding strength of the negative electrode tab 24, reducing the risk of failure due to dropping. Furthermore, using ultrasonic welding or resistance welding can protect the negative electrode current collector 21 and the negative electrode active material layer 22 from being damaged. The negative electrode active material layer 22 of this application includes graphite, which helps to mitigate the problem of change in material structure of the negative electrode active material layer due to the impact of laser welding heat, thereby reducing the risk of lithium precipitation.

In an embodiment of this application, the first positive electrode active material layer 12 includes a first positive electrode active material, a first binder, and a first conductive agent, and the second positive electrode active material layer 13 further includes a second binder and a second conductive agent; and the first positive electrode active material or the second positive electrode active material includes at least one of lithium cobalt oxide, lithium nickel cobalt manganese oxide, lithium nickel cobalt aluminum oxide, lithium manganese oxide, lithium iron phosphate, lithium iron manganese phosphate, or lithium-rich manganese-based oxide. Selection of the above ceramic materials can improve the heat-resistance performance of the first positive electrode active material or the second positive electrode active material, reducing the impact of welding, and helping to enhance the safety performance of the electrochemical apparatus. The first binder or the second binder includes at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. When the binder within the above range is applied to the positive electrode plate, the positive electrode plate has good structural stability, which helps to improve the cycling performance and swelling performance of the electrochemical apparatus. The first conductive agent or the second conductive agent includes at least one of conductive carbon black (Super P, Ketjenblack, or acetylene black), carbon nanotubes (CNTs), conductive graphite, graphene, or carbon nanofibers. The carbon nanotubes may include but are not limited to single-walled carbon nanotubes and/or multi-walled carbon nanotubes. The selection of the above conductive agent helps to improve the conductivity of the positive electrode plate. In this application, based on a mass of the first positive electrode active material layer 12, a mass percentage of the first conductive agent is 0.5% to 5%. Based on a mass of the second positive electrode active material layer 13, a mass percentage of the first conductive agent is 0.5% to 5%.

In this application, the first positive electrode active material or the second positive electrode active material may also include a non-metal element, for example, the non-metal element includes at least one of fluorine, phosphorus, boron, or chlorine. These elements can further enhance the stability of the positive electrode active material. In this application, thickness of the first positive electrode active material layer 12 or the second positive electrode active material layer 13 is not particularly limited, provided that the objectives of the invention in this application can be achieved. For example, the thickness of the first positive electrode active material layer 12 or the second positive electrode active material layer 13 ranges from 30 µm to 120 µm.

In an embodiment of this application, as shown in FIG. 7, the second positive electrode active material layer 13 includes a first layer 131 and a second layer 132 stacked together, the first layer 131 is located between the positive electrode current collector 11 and the second layer 132, the second layer 132 includes the second positive electrode active material, and the first layer 131 includes a ceramic material, a third binder, and a third conductive agent; The ceramic material includes at least one of hafnium dioxide, strontium titanate, tin dioxide, cesium oxide, magnesium oxide, nickel oxide, calcium oxide, barium oxide, zinc oxide, zirconium oxide, yttrium oxide, aluminum oxide, titanium oxide, silicon dioxide, boehmite, magnesium hydroxide, or aluminum hydroxide. Selection of the above ceramic materials can improve the heat-resistance performance of the first positive electrode active material or the second positive electrode active material, reducing the impact of welding. Additionally, when an above ceramic material is selected, a resistance layer with high resistance is provided on a surface of the positive electrode current collector, reducing the risk of an internal short circuit, which could lead to combustion or explosion, thereby enhancing the safety performance of the electrochemical apparatus. The third binder includes at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol. When the binder within the above range is applied to the positive electrode plate, the positive electrode plate has good structural stability, which helps to improve the cycling performance and swelling performance of the electrochemical apparatus. The third conductive agent includes at least one of conductive carbon black (Super P, Ketjenblack, or acetylene black), carbon nanotubes, conductive graphite, graphene, or carbon nanofibers. The selection of the above conductive agent helps to improve the conductivity of the positive electrode plate.

In this application, as shown in FIG. 7, the first positive electrode active material layer 12 may include a third layer 121 and a fourth layer 122 stacked together, where the third layer 121 is located between the positive electrode current collector 11 and the fourth layer 122. The composition of the third layer 121 may be the same as that of the first layer 131, and the composition of the fourth layer 122 may be the same as that of the second layer 132. Details are not repeated in this application.

In an embodiment of this application, the first layer 131 further includes lithium iron phosphate. Lithium iron phosphate has good heat-resistance performance, which helps to improve the heat-resistance performance of the first layer. Additionally, the lithium iron phosphate material has high resistance in the first layer, which can reduce the short-circuit current when a short circuit occurs. Moreover, lithium iron phosphate can provide a certain capacity, which helps to increase the capacity of the electrochemical apparatus. Furthermore, lithium iron phosphate has a small particle size at the nanometer scale, which helps to reduce deformation of the positive electrode plate after cold pressing. During welding, this can lower the risk of poor welding or even welding through the positive electrode current collector, thereby enhancing the safety performance of the electrochemical apparatus.

Preparation methods of the lithium iron phosphate are not particularly limited in this application, provided that the objectives of the invention of this application can be achieved. For example, it can be prepared by the following method: Using FeC₂O₄·8H₂O, MnCO₃, NH₄H₂PO₄, Li₂CO₃, and ZrO₂ as raw materials, after processes of mixing by ball milling, spray granulating, sintering in a reducing atmosphere containing H₂, and crushing, manganese and zirconium doped lithium iron phosphate nanopowder is obtained. With nitrogen gas used as a protective gas, the prepared powder is vacuum-fed into a rotary furnace, continuously sprayed with a sucrose solution, and subjected to rotary stirring and sintering at 600°C to 800°C for 2 hours to 4 hours to form a carbon-coated layer. After cooling, samples are taken to obtain modified lithium iron phosphate powder, which is the above-mentioned lithium iron phosphate material. The average thickness of the carbon-coated layer is 1 µm. Typically, the molar ratio of the raw materials can be adjusted to control the mass percentage of Fe, Mn, and Zr in the lithium iron phosphate material. For example, increasing a proportion of FeC₂O₄·8H₂O increases the mass percentage of Fe in the lithium iron phosphate material; decreasing the proportion of FeC₂O₄·8H₂O reduces the mass percentage of Fe in the lithium iron phosphate material.

In this application, the negative electrode active material layer 22 is disposed on the two opposite surfaces of the negative electrode current collector 21 in the thickness direction. The "surface" herein may be an entire region of the negative electrode current collector 21, or may be a partial region of the negative electrode current collector 21. This is not particularly limited in this application, provided that the objectives of this application can be achieved.

The negative electrode current collector 21 is not particularly limited in this application, provided that the objectives of the invention of this application can be achieved. For example, the negative electrode current collector 21 may include copper foil, copper alloy foil, nickel foil, stainless steel foil, titanium foil, foamed nickel, foamed copper, a composite current collector, or the like. A thickness of the negative electrode current collector 21 is not particularly limited in this application, provided that the objectives of the invention of this application can be achieved. For example, the thickness of the negative electrode current collector 21 may range from 4 µm to 10 µm.

In this application, the negative electrode active material layer 22 further includes a negative electrode active material. A type of the negative electrode active material is not particularly limited in this application, provided that the objectives of the invention of this application can be achieved. For example, the negative electrode active material may include at least one of a mesocarbon microbead, hard carbon, soft carbon, silicon, a silicon-carbon composite, SiOₓ (0 < x ≤ 2), a Li-Sn alloy, a Li-Sn-O alloy, Sn, SnO, SnO₂, spinel-structure lithium titanate Li₄Ti₅O₁₂, a Li-Al alloy, lithium metal, or the like. In this application, the negative electrode active material layer 22 may also include a negative electrode conductive agent. The negative electrode conductive agent is not particularly limited in this application, provided that the objectives of the invention of this application can be achieved. For example, the negative electrode conductive agent may include but is not limited to at least one of conductive carbon black (Super P, Ketjenblack, or acetylene black), carbon nanotubes (CNTs), carbon fibers, graphene, a metal material, or a conductive polymer. The above carbon nanotubes may include but are not limited to single-walled carbon nanotubes and/or multi-walled carbon nanotubes. The above carbon fibers may include but are not limited to vapor-grown carbon fibers and/or nanocarbon fibers. The metal material may include but is not limited to metal powder and/or metal fiber, and specifically, the metal may include but is not limited to at least one of copper, nickel, aluminum, or silver. The above conductive polymer may include but is not limited to at least one of polyphenylene derivative, polyaniline, polythiophene, polyacetylene, or polypyrrole. Based on a mass of the negative electrode active material layer 22, a mass percentage of the negative electrode conductive agent is 0.5% to 5%.

A thickness of the negative electrode active material layer 22 is not particularly limited in this application, provided that the objectives of the invention of this application can be achieved. For example, a thickness of a single-sided negative electrode active material layer may range from 30 µm to 160 µm.

A material of the negative electrode tab 24 is not particularly limited in this application, provided that the objectives of the invention of this application can be achieved. For example, the material of the negative electrode tab may include copper, a copper alloy, nickel, stainless steel, titanium.

In this application, the electrolyte further includes a non-aqueous solvent. The non-aqueous solvent is not particularly limited in this application, provided that the objectives of the invention of this application can be achieved. For example, the non-aqueous solvent may include but is not limited to at least of carboxylic acid ester compound, ether compound, or another organic solvent. The carboxylic acid ester compound may include but is not limited to at least one of methyl acetate, ethyl acetate, n-propyl acetate, n-butyl acetate, methyl propionate, propyl propionate, butyl propionate, methyl butyrate, ethyl butyrate, propyl butyrate, butyl butyrate, γ-butyrolactone, 2,2-difluoroethyl acetate, valerolactone, butyrolactone, ethyl 2-fluoroacetate, ethyl 2,2-difluoroacetate, ethyl trifluoroacetate, ethyl 2,2,3,3,3-pentafluoropropionate, 2,2,3,3,4,4,4,4 -Methyl heptafluorobutyrate, methyl 4,4,4-trifluoro-3-(trifluoromethyl)butyrate, ethyl 2,2,3,3,4,4,5,5,5,5-nonafluoropentanoate, methyl 2,2,3,3,4,4,5,5,6,6,7,7,8,8,9,9,9-heptadecafluorononanoate, or ethyl 2,2,3,3,4,4,5,5,6,6,7,7,8,8,9,9,9-heptadecafluorononanoate. The ether compound may include but is not limited to at least one of ethylene glycol dimethyl ether, diethylene glycol dimethyl ether, tetraethylene glycol dimethyl ether, dibutyl ether, tetrahydrofuran, 2-methyltetrahydrofuran, or bis(2,2,2-trifluoroethyl) ether. The another organic solvent may include but is not limited to at least one of ethyl vinyl sulfone, methyl isopropyl sulfone, isopropyl sec-butyl sulfone, dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphoric acid ester.

The electrochemical apparatus of this application further includes a separator 30. The separator 30 is not particularly limited in this application, provided that the objectives of the invention of this application can be achieved. For example, the material of the separator may include but is not limited to at least one of polyethylene (PE), polypropylene (PP), polytetrafluoroethylene-based polyolefin (PO), a polyester film (for example, a polyethylene terephthalate (PET) film), a cellulose film, a polyimide film (PI), a polyamide film (PA), a spandex film or aramid film. A type of the separator may include but is not limited to at least one of a woven film, a non-woven film (non-woven fabric), a microporous film, a composite film, a laminated film, or a spinning film. The separator 30 of this application may have a porous structure, and a pore size is not particularly limited, provided that the objectives of the invention of this application can be achieved. For example, the pore size may range from 0.01 µm to 1 µm. In this application, the thickness of the separator 30 is not particularly limited, provided that the objectives of the invention of this application can be achieved. For example, the thickness may range from 5 µm to 500 µm.

The electrochemical apparatus in this application is not particularly limited, and may include any apparatus in which an electrochemical reaction occurs. In an embodiment of this application, the electrochemical apparatus may include but is not limited to: a lithium-ion secondary battery (lithium-ion battery), a lithium polymer secondary battery, or a lithium-ion polymer secondary battery. In an embodiment of this application, the structure of the lithium-ion battery in this application includes wound-type structure or laminated-type structure. The structure of the lithium-ion battery in this application includes but is not limited to a pouch lithium-ion battery, a prismatic hard-shell battery, or a cylindrical hard-shell battery.

A second aspect of this application provides a preparation method of an electrochemical apparatus, including:
providing a positive electrode current collector 11, disposing a first positive electrode active material layer 12 on a first surface 111 of the positive electrode current collector 11, and disposing a second positive electrode active material layer 13 on a second surface 112 of the positive electrode current collector 11, wherein the first surface 111 and the second surface 112 are two opposite surfaces of the positive electrode current collector 11, and the first positive electrode active material layer 12 is provided with a first groove 14 exposing the first surface 111; and
providing a positive electrode tab 15, and welding the positive electrode tab 15 to the first surface 111 exposed by the first groove 14, so that a positive electrode connection portion 151 of the positive electrode tab 15 is connected to the first surface 111, where the second surface 112 corresponding to the first groove 14 is covered by the second positive electrode active material layer 13, the second positive electrode active material layer 13 includes a second positive electrode active material, and the second positive electrode active material includes element M, where the element M includes at least one of manganese, iron, lanthanum, zirconium, or yttrium, and based on a total mass of the second positive electrode active material, a mass percentage of manganese or iron is D%, where 0.02 ≤ D ≤ 35.00, and a mass percentage of lanthanum, zirconium, or yttrium is E%, where 0.02 ≤ E ≤ 0.20.

In this application, after the positive electrode tab is welded, an insulating layer can be attached to the negative electrode active material layer facing the first groove to provide insulation. Similarly, after the negative electrode tab is welded, an insulating layer can be attached to both the first positive electrode active material layer and the second positive electrode active material layer facing the second groove to provide insulation. The insulating layer may include at least one of single-sided adhesive tape or double-sided adhesive tape. A material of the insulation layer is not particularly limited in this application, provided that the objectives of the invention of this application can be achieved. For example, the single-sided adhesive tape includes a base layer and an adhesive layer. A material of the base layer includes but is not limited to at least one of polyfluoroolefins, polyethylene terephthalate, polyimide, polyamide-imide, polyvinyl chloride, or polyolefin (for example, biaxially stretched polyolefin heat-shrinkable film), where polyfluoroolefins includes but is not limited to polytetrafluoroethylene or polyvinylidene fluoride. The adhesive layer includes an adhesive material, where the adhesive material includes but is not limited to at least one of carboxymethyl cellulose, styrene-butadiene rubber, polyvinylidene fluoride, polytetrafluoroethylene, fluorinated rubber, polyurethane, polypropylene alcohol, sodium polyacrylate, polyetherimide, or acrylate.

The electrochemical apparatus obtained by the preparation method provided in the second aspect of this application can improve the energy density and safety performance of the electrochemical apparatus.

In an embodiment of this application, laser irradiation is applied to the positive electrode connection portion 151 to weld the positive electrode connection portion 151 to the first surface 111, which can ensure that the connection strength between the positive electrode connection portion 151 and the positive electrode current collector 11 meets the requirements, thereby improving the anti-detachment capability of the positive electrode tab, and enhancing the safety performance of the electrochemical apparatus.

The laser welding equipment is not particularly limited in this application, provided that the objectives of the invention of this application can be achieved. For example, it may be a commercially available laser welding machine. This application can improve the welding strength between the positive electrode connection portion and the positive electrode current collector by increasing the spot diameter size and/or time of laser irradiation. The spot diameter and time of laser irradiation are not particularly limited in this application, which can be adjusted according to the actual welding needs, provided that the objectives of the invention of this application can be achieved.

The preparation process of the electrochemical apparatus of this application may also include but is not limited to the following steps: a positive electrode plate 10, a separator 30, and a negative electrode plate 20 are stacked in sequence and go through operations such as winding and folding as needed to obtain an electrode assembly 1 with a wound structure, the electrode assembly 1 is put into a packaging bag 40, and the packaging bag 40 is injected with an electrolyte and sealed to obtain an electrochemical apparatus; alternatively, a positive electrode plate 10, a separator 30, and a negative electrode plate 20 are stacked in sequence, four corners of the entire laminated structure are fixed with tapes to obtain an electrode assembly 1 with a laminated structure, the electrode assembly 1 is put into a packaging bag 40, and the packaging bag 40 is injected with an electrolyte and sealed to obtain an electrochemical apparatus. In addition, if necessary, an overcurrent prevention element, a guide plate, and the like may be placed in the packaging bag 40 to prevent pressure increase, overcharge, and overdishcarge in the electrochemical apparatus.

The negative electrode current collector and the negative electrode tab in this application are welded through ultrasonic welding or resistance welding. The welding process of this application is not particularly limited and can be selected according to actual welding needs, provided that the objectives of the invention of this application can be achieved.

A third aspect of this application provides an electronic apparatus, including the electrochemical apparatus according to the first aspect of this application. The electrochemical apparatus provided in this application has high energy density and good safety performance, enabling the electronic apparatus in this application to have a long battery life and service life.

The electronic apparatus in this application is not particularly limited, and the electronic apparatus may be any known electronic apparatus in the prior art. In some embodiments, the electronic apparatus may include but is not limited to notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, or the like.

### Examples

The following describes the embodiments of this application more specifically by using examples and comparative examples. Various tests and evaluations are performed in the following methods. In addition, unless otherwise specified, "part" and "%" are based on weight.

### Test method and device

### Metal element percentage test

A lithium-ion battery was discharged to 0% SOC and then disassembled. The positive electrode plate was taken out, soaked in dimethyl carbonate (DMC) for 30 minutes, and then cleaned to remove residual impurities on a surface of the positive electrode plate and dried. The positive electrode plate was placed in a muffle furnace, calcined at 600°C in an air atmosphere for 4 hours, taken out, and the positive electrode active material on the surface of the positive electrode current collector was scraped off to obtain a powder sample. The sample was digested in aqua regia (prepared with a volume ratio of concentrated nitric acid to concentrated hydrochloric acid of 1:3) for 1 hour to obtain a metal ion solution, which was tested using an inductively coupled plasma emission spectrometer to obtain a mass percentage of each metal element.

### Test of welding strength between positive electrode tab and positive electrode current collector

A Gotech tensile testing machine (model 3367) was used to clamp two ends (that is, the positive electrode tab and the positive electrode current collector) of the connection portion between the positive electrode tab and the positive electrode current collector, where the sample width k (mm) was equal to the width of the positive electrode tab, and the tensile speed was 50 mm/min. The maximum force value F₁ (N) during the tensile process was recorded. The welding strength A between the positive electrode tab and the positive electrode current collector was calculated as A = F₁/(k × 100), with the unit N/m.

### Test of thermal conductivities of positive electrode tab and positive electrode current collector

A general-purpose thermal conductivity meter (model TC3200) using the hot-wire method was used to test a sheet sample of 5 cm×5 cm.

### Test of tensile strength of positive electrode current collector

A Gotech tensile testing machine (model 3367) was used to clamp the positive electrode current collector sample for a tensile test. The sample width was 15 mm, the tensile speed was 50 mm/min, and the obtained tensile strength S was recorded, with the unit MPa.

### Dᵥ50 of active material

A lithium-ion battery was fully discharged and then disassembled. The positive electrode plate was taken out, soaked in DMC for 30 minutes, and then cleaned to remove residual impurities on the surface of the positive electrode plate and dried. The positive electrode plate was placed in a muffle furnace, calcined at 600°C in an air atmosphere for 4 hours, taken out, and the positive electrode active material on the surface of the current collector was scraped off. The particle size corresponding to 50% by volume in the system distribution was measured as Dᵥ50 using a laser particle size analyzer, with the unit µm.

### Drop test

First, a lithium-ion battery was placed in a fixture, and an initial voltage U₀ of the lithium-ion battery was tested. After easy-peel tape and the lithium-ion battery were attached, they were pressed with a 5 Kgf weight within 1 minute and left for standing for more than 12 hours. Then, an automatic drop device was used to freely drop the fixture from a height of 1.8 meters onto a granite surface. Then, the following drop sequence was used for the test: up-down-upper right-lower right-upper left-lower left, completing one round of testing, with a total of 3 rounds, that is, 18 times (angle 45 degrees ± 15 degrees). Then, a voltage U₁ of the lithium-ion battery after the drop test was tested; if U₁ was 0, it indicated that the tab had fallen off from a surface of the current collector. Finally, the lithium-ion battery was disassembled to observe whether there was any powder shedding around the single-sided groove welding region of the positive electrode plate.

### Cycling test

### Test environment temperature: 25°C

The operating procedure for each cycle: The lithium-ion battery was charged at a constant current of 2.6C to 4.2 V, then charged at a constant voltage to 2.35C; charged at a constant current of 2.35C to 4.25 V, then charged at a constant voltage to 2C; charged at a constant current of 2C to 4.3 V, then charged at a constant voltage to 1.5C; charged at a constant current of 1.5C to 4.38 V, then charged at a constant voltage to 1.2C; charged at a constant current of 1.2C to 4.45 V, then charged at a constant voltage to 1C; and charged at a constant current of 1C to 4.48 V, and then charged at a constant voltage to 0.1C. After standing for 10 minutes, the lithium-ion battery was discharged: discharged at a constant current of 1.5C to 3.5 V, then discharged at a constant current of 0.7C to 3 V, and finally left for standing for 10 minutes to end one cycle. The lithium-ion batteries obtained in the examples or comparative examples were divided into two groups and cycled for 500 and 1000 cycles, respectively, according to the above charging/discharging steps.

### Lithium precipitation degree judgment

In a drying room (humidity < 1.7%), the lithium-ion batteries after 500 and 1000 cycles were disassembled, and the lithium precipitation of the negative electrode plates was recorded by taking photos. The degree of lithium precipitation was judged by the percentage of the lithium precipitation area. When no lithium precipitation was found, it was considered that no lithium precipitation occurred; mild lithium precipitation: 0 < percentage of lithium precipitation area ≤ 5%; moderate lithium precipitation: 5 < percentage of lithium precipitation area ≤ 15%; and severe lithium precipitation: percentage of lithium precipitation area > 15%, where the percentage of lithium precipitation area was calculated based on the total area of the negative electrode active material layers on two surfaces in the thickness direction of the negative electrode plate.

### Initial energy density test

In a 25°C environment, a lithium-ion battery was charged according to the following operating procedure and then discharged to obtain a discharge capacity of the lithium-ion battery: the lithium-ion battery was charged at a constant current of 0.5C to 4.45 V, then charged at a constant voltage of 4.45 V to 0.025C, left for standing for 5 minutes, discharged at a constant current of 0.5C to 3.0 V, and then left for standing for 5 minutes to obtain the discharge capacity C. After the above charging steps are completed for the lithium-ion battery, the length L, width W, and height H of the lithium-ion battery were measured using a laser thickness gauge to obtain the volume V of the lithium-ion battery, where V = L × W × H. Its initial energy density (ED) was calculated as ED = C/V, with the unit Wh/L.

### Example 1-1

### <Preparation of positive electrode plate>

Li(Ni_{0.5}Co_{0.2}Mn_{0.3})O₂ and lithium manganese oxide (LMO) were mixed at a mass ratio of 6:4 as the positive electrode active material (with Dᵥ50 of 15.1 µm), and the above positive electrode active material, conductive agent conductive carbon black (Super P), and polyvinylidene fluoride (PVDF) were mixed at a mass ratio of 98:1:1, with N-methylpyrrolidone (NMP) added as a solvent to prepare a positive electrode slurry with a solid content of 75wt%, which was stirred to uniformity. Both the first positive electrode active material layer and the second positive electrode active material layer were prepared using the above positive electrode slurry. The positive electrode slurry was evenly applied on the first surface of a 8µm-thick positive electrode current collector aluminum foil, dried at 110°C to obtain a positive electrode plate coated with the positive electrode active material on a single side, with a thickness of the first positive electrode active material layer being 110 µm. Then, the above steps were repeated on the second surface of the positive electrode current collector to obtain a positive electrode plate coated with the positive electrode active material on two sides, with a thickness of the second positive electrode active material layer being 110 µm. After the coating was completed, the positive electrode plate was cold-pressed and then subjected to tab forming, slitting, laser cleaning, and other processes to obtain a positive electrode plate with a first groove in the middle of the first positive electrode active material layer. The aluminum positive electrode tab was welded on the first groove by laser irradiation. The dimensions of the positive electrode plate were 81.9 mm × 1490 mm, and the dimensions of the first groove were 20 mm × 9 mm. Thermal conductivity of the positive electrode current collector (denoted as L) was 217.7 W·m⁻¹·K⁻¹, thermal conductivity of the positive electrode tab (denoted as R) was 217.7 W·m⁻¹·K⁻¹, welding strength between the positive electrode connection portion and the positive electrode current collector was 28 N/m, and tensile strength of the positive electrode current collector was 156 MPa.

### <Preparation of negative electrode plate>

The negative electrode active material conductive graphite, conductive carbon black (Super P), sodium carboxymethyl cellulose, and styrene-butadiene rubber were mixed at a mass ratio of 96.4:1.5:0.5:1.6, and then deionized water was added as a solvent to prepare a negative electrode slurry with a solid content of 60wt%, which was stirred to uniformity. The negative electrode slurry was uniformly applied on one surface of an 8 µm-thick negative electrode current collector copper foil, dried at 110°C to obtain a negative electrode plate with a 130 µm-thick single-sided coating of the negative electrode active material layer, and then the above steps were repeated on another surface of the negative electrode plate to obtain a negative electrode plate coated with the negative electrode active material layer on two sides. After the coating was completed, the negative electrode plate was cold-pressed and then subjected to tab forming, slitting, laser cleaning, and other processes to obtain a negative electrode plate with the second groove in the middle of the negative electrode active material layer on both two sides. The copper negative electrode tab was welded on one of the second grooves by ultrasonic processing. The dimensions of the negative electrode plate were 83.3 mm × 1494 mm, and the dimensions of the second groove were 20 mm × 9 mm.

### <Preparation of electrolyte>

In a glove box with a dry argon atmosphere, the organic solvents ethylene carbonate (EC), propylene carbonate (PC), diethyl carbonate (DEC), and ethyl propionate (EP) were mixed at a mass ratio of EC:PC:DEC:EP=3:1:3:3, and then lithium salt lithium hexafluorophosphate (LiPF₆) was added to the organic solvents for dissolving. The foregoing substances were mixed to uniformity to obtain an electrolyte with a lithium salt concentration of 1 mol/L.

### <Preparation of separator>

PVDF and aluminum oxide ceramic were mixed at a mass ratio of 9:1, deionized water was added as a solvent to prepare a slurry with a solid content of 12wt% slurry, which was stirred to uniformity, and the slurry was evenly applied on one surface of a 5 µm-thick polyethylene film substrate, and dried to obtain a separator.

### <Preparation of lithium-ion battery>

The positive electrode plate, separator, and negative electrode plate were stacked in sequence, with the separator placed between the positive electrode plate and the negative electrode plate to serve as insulation. Then, single-sided adhesive tape was attached as an insulating layer to the negative electrode active material layer facing the first groove, and to the first positive electrode active material layer and the second positive electrode active material layer facing the second groove, respectively. Then, winding started from one end to obtain an electrode assembly. The electrode assembly was placed into an aluminum-plastic film packaging shell, dried in an 85°C vacuum oven for 12 hours to remove moisture, injected with the prepared electrolyte, and subjected to vacuum sealing, standing, formation (charged at a constant current of 0.02C to 3.5 V, then charged at a constant current of 0.1C to 3.9 V), shaping, and capacity process to obtain a lithium-ion battery.

### Example 1-2

The same as Example 1-1 except that in <Preparation of positive electrode plate>, Li(Ni_{0.5}Co_{0.2}Mn_{0.3})O₂ was used as the positive electrode active material (with Dᵥ50 as shown in Table 1).

### Example 1-3

The same as Example 1-1 except that in <Preparation of positive electrode plate>, Mn-doped lithium cobalt oxide, which was obtained by mixing lithium cobalt oxide (LiCoO₂) and manganese oxide (MnO₂) at a mass ratio of 25:1 and co-sintered at 850°C for 12 hours, was used as the positive electrode active material (with Dᵥ50 as shown in Table 1).

### Example 1-4

The same as Example 1-1 except for <Preparation of positive electrode plate> was different from that of Example 1-1.

### <Preparation of positive electrode plate>

Lithium iron phosphate (LFP, with Dᵥ50 as shown in Table 1), conductive agent conductive carbon black (Super P), and PVDF were mixed at a mass ratio of 98:1:1, added with N-methylpyrrolidone (NMP) as a solvent to prepare a first layer slurry with a solid content of 75wt%, which was stirred to uniformity. The first layer slurry was evenly applied on the first surface of an 8µm-thick positive electrode current collector aluminum foil, dried at 110°C to obtain a positive electrode plate coated with the positive electrode active material on a single side, with a thickness of the first layer being 7µm. Then, the above steps were repeated on the second surface of the positive electrode current collector, so that the first layer was coated on two surfaces of the positive electrode current collector.

The above positive electrode active material LiCoO₂, conductive agent conductive carbon black (Super P), and PVDF were mixed at a mass ratio of 98:1:1, with N-methylpyrrolidone (NMP) added as a solvent to prepare a positive electrode slurry with a solid content of 75wt%, which was stirred to uniformity. Both the first positive electrode active material layer and the second positive electrode active material layer were prepared using the above positive electrode slurry. The positive electrode slurry was evenly applied on the first layer on the first surface, dried at 110°C to obtain a positive electrode plate coated with the positive electrode active material on a single side, with a thickness of the first positive electrode active material layer being 110 µm. Then, the above steps were repeated on the second surface of the positive electrode current collector to obtain a positive electrode plate coated with the positive electrode active material on two sides, with a thickness of the second positive electrode active material layer being 110 µm. After the coating was completed, the positive electrode plate was cold-pressed and then subjected to tab forming, slitting, laser cleaning, and other processes to obtain a positive electrode plate with the first groove in the middle of the first positive electrode active material layer. The first groove was used for welding the positive electrode tab. The dimensions of the positive electrode plate were 81.9 mm × 1490 mm, and the dimensions of the first groove were 20 mm × 9 mm. The thermal conductivity of the positive electrode current collector (denoted as L) was 217.7 W·m⁻¹·K⁻¹, and the thermal conductivity of the positive electrode tab (denoted as R) was 217.7 W·m⁻¹·K⁻¹.

### Example 1-5

The same as Example 1-1 except that in <Preparation of positive electrode plate>, FeC₂O₄·8H₂O, MnCO₃, NH₄H₂PO₄, Li₂CO₃, and ZrO₂ were used as raw materials, for which the molar ratio was adjusted, and after processes of ball milling, spray granulating, sintering in a reducing atmosphere containing H₂, and crushing, manganese and zirconium doped lithium iron phosphate nanopowder was obtained; with nitrogen gas used as a protective gas, the prepared powder is vacuum-fed into a rotary furnace, continuously sprayed with a sucrose solution, and subjected to rotary stirring and sintering at 700°C for 3 hours to form a carbon-coated layer. After cooling, samples were taken to obtain modified lithium iron phosphate powder, namely lithium iron phosphate (LFP-1), with an average thickness of the carbon-coated layer being 1 µm; and the obtained LFP-1 was used as the positive electrode active material (with Dᵥ50 as shown in Table 1).

### Example 1-6

The same as Example 1-1 except that in <Preparation of positive electrode plate>, LiCoO₂ and zirconium oxide (ZrO₂) were mixed at a mass ratio of 25:1, and co-sintered at 850°C for 12 hours to obtain Zr-doped lithium cobalt oxide as the positive electrode active material (with Dv50 as shown in Table 1).

### Example 1-7

The same as Example 1-1 except that in <Preparation of positive electrode plate>, LiCoO₂ and yttrium fluoride (YF₃) were mixed at a mass ratio of 25:1, and co-sintered at 850°C for 10 hours to obtain Y-doped lithium cobalt oxide as the positive electrode active material (with Dv50 as shown in Table 1).

### Example 1-8

The same as Example 1-1 except that in <Preparation of positive electrode plate>, LiCoO₂ and lanthanum oxide (La₂O₃) were mixed at a mass ratio of 25:1, and co-sintered at 950°C for 12 hours to obtain La-doped lithium cobalt oxide as the positive electrode active material (with Dv50 as shown in Table 1).

### Example 1-9

The same as Example 1-1 except that in <Preparation of positive electrode plate>, LiCoO₂, MnO₂, ZrO₂, YF₃, and La₂O₃ were mixed at a mass ratio of 20:1:1:1:1, and co-sintered at 950°C for 16 hours to obtain Mn+Zr+Y+La co-doped lithium cobalt oxide as the positive electrode active material (with Dv50 as shown in Table 1).

### Example 1-10

The same as Example 1-1 except that in <Preparation of positive electrode plate>, LiCoO₂ and Li(Ni_{0.5}Co_{0.2}Mn_{0.3})O₂ were mixed at a mass ratio of 8:2 as the positive electrode active material (with Dᵥ50 as shown in Table 1).

### Example 1-11

The same as Example 1-1 except that in <Preparation of positive electrode plate>, LiCoO₂ and Li(Ni_{0.5}Co_{0.2}Mn_{0.3})O₂ were mixed at a mass ratio of 6:4 as the positive electrode active material (with Dv50 as shown in Table 1).

### Example 1-12

The same as Example 1-4 except that in <Preparation of positive electrode plate>, LFP, aluminum oxide, conductive carbon black (Super P), and PVDF were mixed at a mass ratio of 96:1:1:2 when preparing the first layer slurry.

### Example 2-1

The same as Example 1-1 except that in <Preparation of positive electrode plate>, Dᵥ50 of the positive electrode active material was adjusted as shown in Table 2.

### Example 2-2 and example 2-3

The same as Example 1-9 except that the thickness of the positive electrode current collector was adjusted according to Table 2.

### Example 2-4

The same as Example 1-9 except that a welding strength of 5 N/m between the positive electrode connection portion and the positive electrode current collector was achieved by adjusting the laser spot diameter size and laser irradiation time.

### Example 2-5

The same as Example 1-9 except that a welding strength of 50 N/m between the positive electrode connection portion and the positive electrode current collector was achieved by adjusting the laser spot diameter size and laser irradiation time.

### Example 2-6

The same as Example 1-9 except that the thickness of the positive electrode current collector was 6 µm, a welding strength of 35 N/m between the positive electrode connection portion and the positive electrode current collector was achieved by adjusting the laser spot diameter size and laser irradiation time, and the positive electrode current collector had a tensile strength of 100 MPa and was made of aluminum foil.

### Example 2-7

The same as Example 1-9 except that the thickness of the positive electrode current collector was 14 µm, a welding strength of 35 N/m between the positive electrode connection portion and the positive electrode current collector was achieved by adjusting the laser spot diameter size and laser irradiation time, and the positive electrode current collector had a tensile strength of 50 MPa and was made of aluminum alloy.

### Example 2-8

The same as Example 1-9 except that the material of the positive electrode current collector was stainless steel with a thermal conductivity of 30 W·m⁻¹·K⁻¹, and the material of the positive electrode tab was stainless steel with a thermal conductivity of 30 W·m⁻¹·K⁻¹.

### Example 2-9

The same as Example 1-9 except that the material of the positive electrode current collector was aluminum alloy with a thermal conductivity of 400 W·m⁻¹·K⁻¹, and the material of the positive electrode tab was aluminum alloy with a thermal conductivity of 400 W·m⁻¹·K⁻¹.

### Comparative example 1

The same as Example 1-1 except that Li(Ni_{0.5}Co_{0.2}Mn_{0.3})O₂ and lithium manganese oxide (LMO) were mixed at a mass ratio of 5:5 as the positive electrode active material.

### Comparative example 2

The same as Example 1-1 except that in <Preparation of positive electrode plate>, LiCoO₂ and MnO₂ were mixed at a mass ratio of 50:1, and co-sintered at 850°C for 4 hours to obtain Mn-doped lithium cobalt oxide as the positive electrode active material.

### Comparative example 3

The same as Example 1-1 except that in <Preparation of positive electrode plate>, FeC₂O₄·8H₂O, MnCO₃, NH₄H₂PO₄, Li₂CO₃, and ZrO₂ were used as raw materials, for which the molar ratio was adjusted, and after processes of ball milling, spray granulating, sintering in a reducing atmosphere containing H₂, and crushing, manganese and zirconium doped lithium iron phosphate nanopowder was obtained; with nitrogen gas used as a protective gas, the prepared powder was vacuum-fed into a rotary kiln, continuously sprayed with a sucrose solution, and sintered at 700°C for 3 hours to form a carbon-coated layer; and after cooling, samples were taken to obtain modified lithium iron phosphate powder, namely lithium iron phosphate (LFP-2), where an average thickness of the carbon-coated layer is 1 µm; and the obtained LFP-2 was used as the positive electrode active material (with Dᵥ50 as shown in Table 1).

### Comparative example 4

The same as Example 1-4 except that in <Preparation of positive electrode plate>, the thickness of the first layer was 2 µm.

### Comparative example 5

The same as Example 1-1 except that in <Preparation of positive electrode plate>, LiCoO₂ and ZrO₂ were mixed at a mass ratio of 18:1, and co-sintered at 850°C for 5 hours to obtain Zr-doped lithium cobalt oxide as the positive electrode active material.

### Comparative example 6

The same as Example 1-1 except that in <Preparation of positive electrode plate>, LiCoO₂ and ZrO₂ were mixed at a mass ratio of 50:1, and co-sintered at 850°C for 24 hours to obtain Zr-doped lithium cobalt oxide as the positive electrode active material.

### Comparative example 7

The same as Example 1-1 except that in <Preparation of positive electrode plate>, the positive electrode plate with grooves in the middle of both the first positive electrode active material layer and the second positive electrode active material layer was used.

The relevant parameters and performance tests of the various examples and comparative examples are shown in Table 1 and Table 2.

**Table 1**

| | Element M | Percentage of element M (%) | B (µm) | Whether U₁ is 0 | Powder shedding | Lithium precipitation after 500 cycles | Lithium precipitation after 1000 cycles | ED (Wh/L) |
|---|---|---|---|---|---|---|---|---|
| Example 1-1 | Mn | 34.12 | 15.1 | No | None | No lithium precipitation | No lithium precipitation | 731.3 |
| Example 1-2 | Mn | 16.6 | 4.7 | No | None | No lithium precipitation | No lithium precipitation | 742.5 |
| Example 1-3 | Mn | 0.548 | 15.1 | No | None | No lithium precipitation | No lithium precipitation | 750.0 |
| Example 1-4 | Fe | 0.295 | 14.0 | No | None | No lithium precipitation | No lithium precipitation | 756.0 |
| Example 1-5 | Mn+Fe+Zr | 34.361 (Mn:0.02, Fe:34.34, and Zr:0.001) | 0.6 | No | None | No lithium precipitation | No lithium precipitation | 720.0 |
| Example 1-6 | Zr | 0.035 | 14.1 | No | None | No lithium precipitation | No lithium precipitation | 750.0 |
| Example 1-7 | Y | 0.102 | 14.1 | No | None | No lithium precipitation | No lithium precipitation | 750.0 |
| Example 1-8 | La | 0.072 | 14.1 | No | None | No lithium precipitation | No lithium precipitation | 750.0 |
| Example 1-9 | Mn+Zr+Y+La | 0.366(Mn:0.217, Zr:0.036, Y:0.075, and La:0.038) | 14.1 | No | None | No lithium precipitation | No lithium precipitation | 750.0 |
| Example 1-10 | Mn+Zr | 6.37 (Mn:6.31 and Zr:0.06) | 8.2 | No | None | No lithium precipitation | No lithium precipitation | 738.8.0 |
| Example 1-11 | Mn+Zr | 2.724 (Mn:2.65 and Zr:0.074) | 7.8 | No | None | No lithium precipitation | No lithium precipitation | 730.0 |
| Example 1-12 | Fe | Fe 0.295 | 14.0 | No | None | No lithium precipitation | No lithium precipitation | 756.0 |
| Comparative example 1 | Mn | 36.100 | 15.1 | No | None | / | / | 725.3 |
| Comparative example 2 | Mn | 0.003 | 15.1 | No | Yes | Mild lithium precipitation | Moderate lithium precipitation | 753.8 |
| Comparative example 3 | Mn+Fe+Zr | 36.421 (Mn:0.02, Fe:36.4, and Zr:0.001) | 0.6 | No | None | - | - | 720.0 |
| Comparative example 4 | Fe | 0.015 | 14.0 | No | Yes | Mild lithium precipitation | Moderate lithium precipitation | 763.2 |
| Comparative example 5 | Zr | 0.210 | 14.1 | No | None | No lithium precipitation | No lithium precipitation | 726.8 |
| Comparative example 6 | Zr | 0.006 | 14.1 | No | Yes | Mild lithium precipitation | Moderate lithium precipitation | 750.0 |
| Comparative example 7 | Mn | 34.12 | 15.1 | No | None | No lithium precipitation | No lithium precipitation | 725.0 |

| | | | | | | | | |
|---|---|---|---|---|---|---|---|---|
| "/" indicates that the lithium-ion battery could only cycle up to 200 cycles and could not cycle up to 500/1000 cycles, resulting in no test results for that item; "-" indicates that the lithium-ion battery could only cycle up to 400 cycles and could not cycle up to 500/1000 cycles, resulting in no test results for that item. | | | | | | | | |

Overall, from Example 1-1 to Example 1-12, and Comparative Example 1 to Comparative Example 7, it can be seen that a lithium-ion battery with the single-sided groove-embedded tab structure and the type and percentage of element M in this application has alleviated powder shedding and lithium precipitation issues, and increased energy density, indicating that the lithium-ion battery of this application has excellent safety performance and high energy density.

From Example 1-1, Comparative Example 1, and Comparative Example 2, it can be seen that when the percentage of Mn in the second positive electrode active material is too high (for example, in Comparative Example 1), the lithium-ion battery has poor cycling performance and relatively low energy density; when the percentage of Mn in the second positive electrode active material is too low (for example, in Comparative Example 2), it is insufficient to maintain the stability of the electrode plate near the welding region during the lifecycle of the lithium-ion battery, leading to an increased risk of lithium precipitation and the appearance of powder shedding after cycling; and through the controlling of the percentage of Mn in the second positive electrode active material within the range of this application, the safety performance and energy density of the lithium-ion battery are improved.

From Example 1-5 and Comparative Example 3, it can be seen that when the second positive electrode active material includes multiple elements such as Mn, Fe, and Zr, through the controlling of the percentage of element M within the range of this application, the safety performance and energy density of the lithium-ion battery are improved. From Example 1-4 and Comparative Example 4, it can be seen that through the controlling of the percentage of Fe in the second positive electrode active material within the range of this application, the safety performance and energy density of the lithium-ion battery are improved. From Example 1-6, Comparative Example 5, and Comparative Example 6, it can be seen that when the percentage of Zr in the second positive electrode active material is too high (for example, in Comparative Example 5), the resulting lithium-ion battery has poor cycling performance and low energy density; when the percentage of Zr in the second positive electrode active material is too low, it was insufficient to maintain the stability of the electrode plate near the welding region during the lifecycle of the lithium-ion battery, leading to an increased risk of lithium precipitation and the appearance of powder shedding after cycling. and through the controlling of the percentage of Zr in the second positive electrode active material within the range of this application, the safety performance and energy density of the lithium-ion battery are improved.

**Table 2**

| | L (W·m⁻¹·K⁻¹) | R (W·m⁻¹·K⁻¹) | B (µm) | T (µm) | A (N/m) | S (MPa) | Satisfies equation | Whether U₁ is 0 | Powder shedding | Lithium precipitation after 500 cycles | Lithium precipitation after 1000 cycles | ED (Wh/L) |
|---|---|---|---|---|---|---|---|---|---|---|---|---|
| Example 1-5 | 217.7 | 217.7 | 0.6 | 8 | 28 | 156 | Yes | No | None | No lithium precipitation | No lithium precipitation | 750 |
| Example 1-9 | 217.7 | 217.7 | 14.1 | 8 | 28 | 156 | Yes | No | None | No lithium precipitation | No lithium precipitation | 750 |
| Example 2-1 | 217.7 | 217.7 | 18.0 | 8 | 28 | 156 | Yes | No | None | No lithium precipitation | No lithium precipitation | 750 |
| Example 2-2 | 217.7 | 217.7 | 14.1 | 4 | 28 | 156 | Yes | No | None | No lithium precipitation | No lithium precipitation | 750 |
| Example 2-3 | 217.7 | 217.7 | 14.1 | 14 | 28 | 156 | Yes | No | None | No lithium precipitation | No lithium precipitation | 750 |
| Example 2-4 | 217.7 | 217.7 | 14.1 | 8 | 5 | 156 | Yes | No | None | No lithium precipitation | No lithium precipitation | 750 |
| Example 2-5 | 217.7 | 217.7 | 14.1 | 8 | 50 | 156 | Yes | No | None | No lithium precipitation | No lithium precipitation | 750 |
| Example 2-6 | 217.7 | 217.7 | 14.1 | 6 | 35 | 100 | Yes | No | None | No lithium precipitation | No lithium precipitation | 750 |
| Example 2-7 | 217.7 | 217.7 | 14.1 | 14 | 50 | 50 | No | Yes | Yes | Mild lithium precipitation | Mild lithium precipitation | 750 |
| Example 2-8 | 30.0 | 30.0 | 14.1 | 8 | 28 | 156 | Yes | No | None | No lithium precipitation | No lithium precipitation | 750 |
| Example 2-9 | 400.0 | 400.0 | 14.1 | 8 | 28 | 156 | Yes | No | None | No lithium precipitation | No lithium precipitation | 750 |

From Example 1-5, Example 1-9, and Example 2-1 to Example 2-7, it can be seen that adjusting B, A, T, and S to satisfy the relationship B/T × A < S is beneficial to improve the anti-detachment capability of the positive electrode tab of the lithium-ion battery, and reduce the risk of lithium precipitation of the negative electrode plate, thereby enhancing the safety performance of the lithium-ion battery.

Dᵥ50 of the second positive electrode active material, thickness of the positive electrode current collector, and welding strength between the positive electrode connection portion and the positive electrode current collector usually may affect the safety performance of the lithium-ion battery. From Example 1-5, Example 1-9, and Example 2-1 to Example 2-7, it can be seen that through the controlling of the above parameters within the range of this application, a lithium-ion battery with good safety performance can be obtained.

The thermal conductivities of the positive electrode tab and the positive electrode current collector usually may affect the heat dissipation performance of the positive electrode plate. From Example 1-9, Example 2-8, and Example 2-9, it can be seen that through the controlling of the thermal conductivities of the positive electrode tab and the positive electrode current collector within the range of this application, timely heat dissipation can be ensured, avoiding the accumulation of a large amount of heat near the welding region, reducing the risk of loss of adhesion of the binder in the second positive electrode active material layer corresponding to the positive electrode connection portion due to carbonization, thereby alleviating the lithium precipitation issue of the corresponding negative electrode plate near the welding region, resulting in a lithium-ion battery with good safety performance.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising an electrode assembly, wherein the electrode assembly comprises a positive electrode plate; the positive electrode plate comprises a positive electrode current collector, a first positive electrode active material layer disposed on a first surface of the positive electrode current collector, and a second positive electrode active material layer disposed on a second surface of the positive electrode current collector; the first surface and the second surface are two opposite surfaces of the positive electrode current collector, and the first positive electrode active material layer is provided with a first groove exposing the first surface;
the positive electrode plate further comprises a positive electrode tab, the positive electrode tab comprises a positive electrode connection portion, the positive electrode connection portion is at least partially located within the first groove and welded to the first surface, and the second surface corresponding to the first groove is covered by the second positive electrode active material layer;
the second positive electrode active material layer comprises a second positive electrode active material, the second positive electrode active material comprises element M; and the element M comprises at least one of manganese or iron, and at least one of lanthanum, zirconium, or yttrium; and
based on a total mass of the second positive electrode active material, a mass percentage of the at least one of manganese or iron is D%, wherein 0.02 ≤ D ≤ 35.00, and a mass percentage of the at least one of lanthanum, zirconium, or yttrium is E%, wherein 0.02 ≤ E ≤ 0.20.

2. The electrochemical apparatus according to claim 1, wherein the positive electrode connection portion is welded to the first surface through laser welding.

3. The electrochemical apparatus according to claim 1, wherein the positive electrode connection portion and the first surface are welded to form a welding portion, wherein the welding portion penetrates through the positive electrode tab and at least partially penetrates the positive electrode current collector.

4. The electrochemical apparatus according to claim 1, wherein Dᵥ50 of the second positive electrode active material is B µm, welding strength between the positive electrode connection portion and the positive electrode current collector is A N/m, a thickness of the positive electrode current collector is T µm, and tensile strength of the positive electrode current collector is S MPa, wherein B/T × A < S.

5. The electrochemical apparatus according to claim 4, wherein 0.5 ≤ B ≤ 18, 5 ≤ A ≤ 50, 4 ≤ T ≤14, and 50 ≤ S ≤ 500.

6. The electrochemical apparatus according to claim 1, wherein a thermal conductivity of the positive electrode current collector ranges from 30 W·m⁻¹·K⁻¹ to 400 W·m⁻¹·K⁻¹, and a thermal conductivity of the positive electrode tab ranges from 30 W·m⁻¹·K⁻¹ to 400 W·m⁻¹·K⁻¹.

7. The electrochemical apparatus according to claim 1, wherein a thermal conductivity of the positive electrode current collector ranges from 200 W·m⁻¹·K⁻¹ to 250 W·m⁻¹·K⁻¹, and a thermal conductivity of the positive electrode tab ranges from 200 W·m⁻¹·K⁻¹ to 250 W·m⁻¹·K⁻¹.

8. The electrochemical apparatus according to claim 1, wherein the electrochemical apparatus comprises a packaging bag, the electrode assembly is accommodated in the packaging bag, and the first surface faces the packaging bag.

9. The electrochemical apparatus according to claim 1, wherein the electrode assembly further comprises a negative electrode plate, and a separator disposed between the positive electrode plate and the negative electrode plate; the positive electrode plate, the separator, and the negative electrode plate are stacked together; and the second positive electrode active material layer on the part of the second surface corresponding to the first groove is in contact with the separator.

10. The electrochemical apparatus according to claim 9, wherein the negative electrode plate comprises a negative electrode current collector and negative electrode active material layers disposed on two surfaces of the negative electrode current collector, the negative electrode active material layers on the two surfaces of the negative electrode current collector each are provided with a second groove exposing the surface of the negative electrode current collector, and the second groove on one side of the negative electrode current collector is opposite to the second groove on another side of the negative electrode current collector; and
the negative electrode plate further comprises a negative electrode tab, wherein the negative electrode tab comprises a negative electrode connection portion, and the negative electrode connection portion is at least partially located within the second groove and welded to the negative electrode current collector, the welding comprising ultrasonic welding or resistance welding; and the negative electrode active material layer comprises graphite.

11. The electrochemical apparatus according to claim 1, wherein the first positive electrode active material layer comprises a first positive electrode active material, a first binder, and a first conductive agent; the second positive electrode active material layer further comprises a second binder and a second conductive agent;
the first positive electrode active material or the second positive electrode active material comprises at least one of lithium cobalt oxide, lithium nickel cobalt manganese oxide, lithium nickel cobalt aluminum oxide, lithium manganese oxide, lithium iron phosphate, lithium iron manganese phosphate, or lithium-rich manganese-based oxide;
the first binder or the second binder comprises at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol; and
the first conductive agent or the second conductive agent comprises at least one of conductive carbon black, carbon nanotubes, conductive graphite, graphene, or carbon nanofibers.

12. The electrochemical apparatus according to claim 1, wherein the second positive electrode active material layer comprises a first layer and a second layer stacked together, the first layer is located between the positive electrode current collector and the second layer, the second layer comprises the second positive electrode active material; and the first layer comprises a ceramic material, a third binder, and a third conductive agent;
the ceramic material comprises at least one of hafnium dioxide, strontium titanate, tin dioxide, cesium oxide, magnesium oxide, nickel oxide, calcium oxide, barium oxide, zinc oxide, zirconium oxide, yttrium oxide, aluminum oxide, titanium oxide, silicon dioxide, boehmite, magnesium hydroxide, or aluminum hydroxide;
the third binder comprises at least one of polyvinylidene fluoride, a vinylidene fluoride-fluorinated olefin copolymer, polyvinyl pyrrolidone, polyacrylonitrile, polymethyl acrylate, polytetrafluoroethylene, sodium carboxymethyl cellulose, styrene-butadiene rubber, polyurethane, fluorinated rubber, or polyvinyl alcohol; and
the third conductive agent comprises at least one of conductive carbon black, carbon nanotubes, conductive graphite, graphene, or carbon nanofibers.

13. The electrochemical apparatus according to claim 12, wherein the first layer further comprises lithium iron phosphate.

14. A method for preparing an electrochemical apparatus, comprisingthe method :
providing a positive electrode current collector, disposing a first positive electrode active material layer on a first surface of the positive electrode current collector, and disposing a second positive electrode active material layer on a second surface of the positive electrode current collector, wherein the first surface and the second surface are two opposite surfaces of the positive electrode current collector; providing the first positive electrode active material layer with a first groove exposing the first surface; and
providing a positive electrode tab, and welding the positive electrode tab to the first surface exposed by the first groove, such that a positive electrode connection portion of the positive electrode tab is connected to the first surface, covering a part of the second surface corresponding to the first groove by the second positive electrode active material layer.

15. The method according to claim 14, wherein laser irradiation is applied on the positive electrode connection portion such that the positive electrode connection portion is welded to the first surface.

16. An electronic apparatus, comprising the electrochemical apparatus according to any one of claims 1 to 13.
